# EUROPEAN PATENT SPECIFICATION

(11) **EP 3 674 600 B1**
(45) Date of publication and mention of the grant of the patent: **09.06.2021**
(21) Application number: 19172898.9
(22) Date of filing: 07.05.2019
(51) Int. Cl.: F21S 9/03, F21V 21/30, F21S 8/08, F21V 23/04, F21W 131/109, F21Y 115/10

(54) **SOLAR DISK LIGHT WITH SWIVEL MOUNT**
SOLARPLATTENLEUCHTE MIT SCHWENKHALTERUNG
LUMIÈRE DE DISQUE SOLAIRE À SUPPORT PIVOTANT

(30) Priority: 24.12.2018 US 201816231813
(43) Date of publication of application: 01.07.2020
(73) Proprietor: E. Mishan & Sons, Inc., New York, NY 10001 (US)
(72) Inventor: Hollinger, Fred, Monroe Township, NJ 08831 (US)
(74) Representative: Loyer & Abello

(56) References cited:
- CN-A- 106 764 844
- CN-U- 202 915 232
- US-A1- 2009 196 041
- US-A1- 2011 292 643
- US-A1- 2013 250 559
- US-A1- 2016 334 068
- Anonymous: "4Pcs 4 LED Solar Powered Ground Lights Outdoor lamp Waterproof LED Solar Path Lights Garden Landscape Spike Lighting for Yard Driveway Lawn Pathway - White - - Amazon.com", , 26 May 2017 (2017-05-26), XP055612389, Retrieved from the Internet: URL:https://www.amazon.com/Powered-Waterpr oof-Landscape-Lighting-Driveway/dp/B07125K XLW/ [retrieved on 2019-08-12]

## Description

### CROSS-REFERENCE TO RELATED APPLICATIONS

This application is a continuation-in-part of United States Patent Application Ser. No. 29/662,559, filed September 6, 2018, now pending, which is assigned to the assignee of the application

### FIELD AND BACKGROUND OF THE INVENTION

The subject technology relates to small solar-powered lighting devices for portable or landscape use Document CN 106 764 844 A discloses a tiltable solar disk light according to the preamble of claim 1. Documents US 2011/292643 A1 and US 2016/334068 A1 also represent prior art relevant to the present invention.

### SUMMARY OF THE INVENTION

According to an aspect of the subject technology, a portable or landscape lighting fixture or luminaire consists of a self-contained light source, for example a disk light body, including one or more light-emitting diodes (LEDs), solar cells for collecting solar energy to power the LEDs, a rechargeable battery for storing energy collected by the solar cells, and driver circuitry to power the LEDs with the stored energy. The disk light body is mounted in a frame by means which permit the disk light to tilt or rotate within the frame, enabling the user to tilt or swivel the disk light to face in different directions. This permits the user to tilt or swivel the disk light to harvest solar energy and cast illumination in different directions while the frame remains in place.

For use as a landscape light, a mounting spike is attached to the frame, for affixing the lighting fixture to the ground. The mounting spike is preferably removable from the frame and consists of two interlocking blades. Each blade has integrally formed attachment arms for attaching the blade to the frame. The attachment arms are upswept, curved and shaped to create a clearance or gap between the spike and the ground on the one hand, and the disk light body on the other hand for sufficient clearance that the disk light may be tilted or swiveled within the frame, while the frame remains attached to the ground by means of the spike.

The various features of novelty which characterize the subject technology are pointed out with particularity in the claims annexed to and forming a part of this disclosure. For a better understanding of the subject technology, its operating advantages and specific objects attained by its uses, reference is made to the accompanying drawings and descriptive matter in which preferred embodiments of the subject technology are illustrated.

### BRIEF DESCRIPTION OF THE DRAWINGS

Figure 1 is a view of the top of a disk light according to a non-limiting embodiment of the subject technology.
Figure 2 is a view of the bottom of a disk light according to a non-limiting embodiment of the subject technology.
Figure 3 is a view of the side of a disk light, with the disk body tilted with respect to the frame, according to a non-limiting embodiment of the subject technology.
Figure 4 is a high-angle view of the side of a disk light, with the disk body tilted with respect to the frame, according to a non-limiting embodiment of the subject technology.
Figure 5 is a view of the side of a disk light, with the disk body tilted with respect to the frame, according to a non-limiting embodiment of the subject technology.
Figure 6 is a high-angle view of the side of a disk light, with the disk body tilted with respect to the frame, according to a non-limiting embodiment of the subject technology.
Figure 7 is a high-angle view of the frame of a disk light according to a non-limiting embodiment of the subject technology.
Figure 8 is a high-angle view of a disk light with the frame disassembled according to a non-limiting embodiment of the subject technology.
Figure 9 is a high-angle view of a disk light with the frame disassembled according to a non-limiting embodiment of the subject technology.
Figure 10 is a top view of a disk body disassembly according to a non-limiting embodiment of the subject technology.
Figure 11 is a view of the blade components of a landscape spike according to a non-limiting embodiment of the subject technology.
Figure 12 is a view of a landscape spike according to a non-limiting embodiment of the subject technology.
Figure 13 is a high-angle view of a side view of a disk light with a landscape spike installed according to a non-limiting embodiment of the subject technology.
Figure 14 is a view of a side view of a disk light with a landscape spike installed according to a non-limiting embodiment of the subject technology.
Figure 15 is a view of a side view of a disk light with a landscape spike installed, with the disk body tilted with respect to the frame, according to a non-limiting embodiment of the subject technology.
Figure 16 is a view of a side view of a disk light with a landscape spike installed, with the disk body tilted with respect to the frame, according to a non-limiting embodiment of the subject technology.
Figure 17 is a view of a side view of a disk light with a landscape spike installed, with the disk body tilted with respect to the frame, according to a non-limiting embodiment of the subject technology.

### DETAILED DESCRIPTION OF THE INVENTION

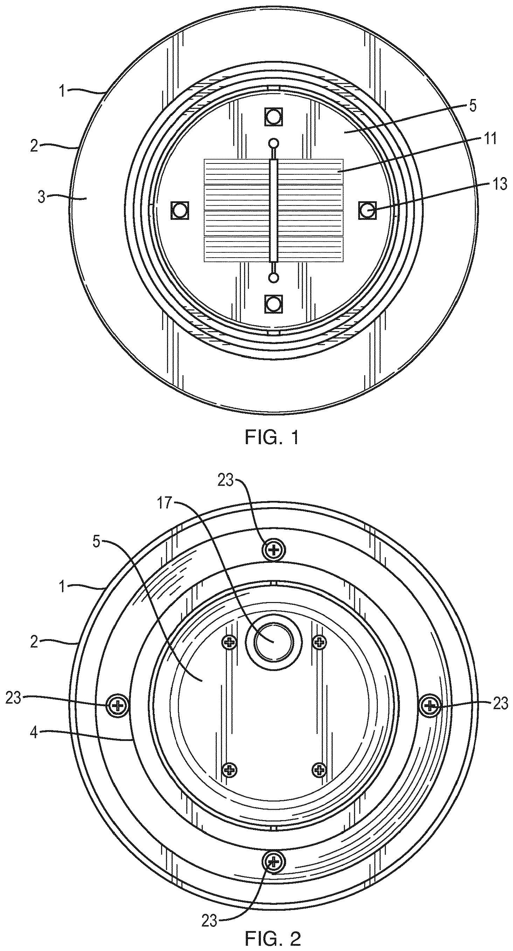

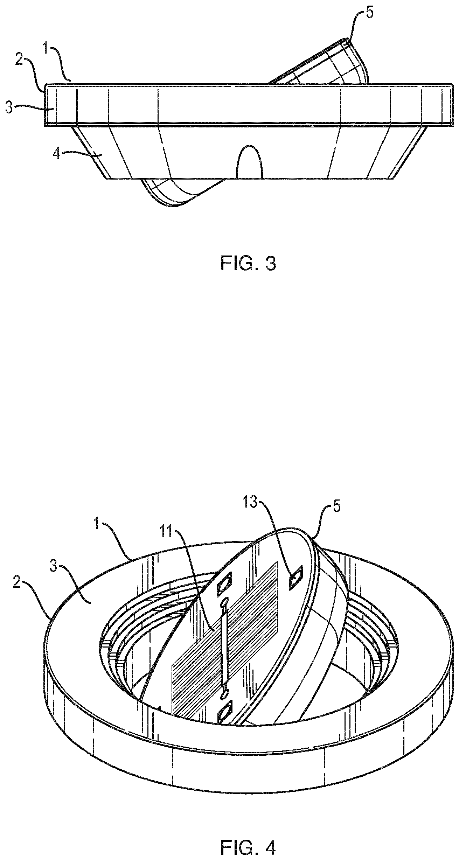

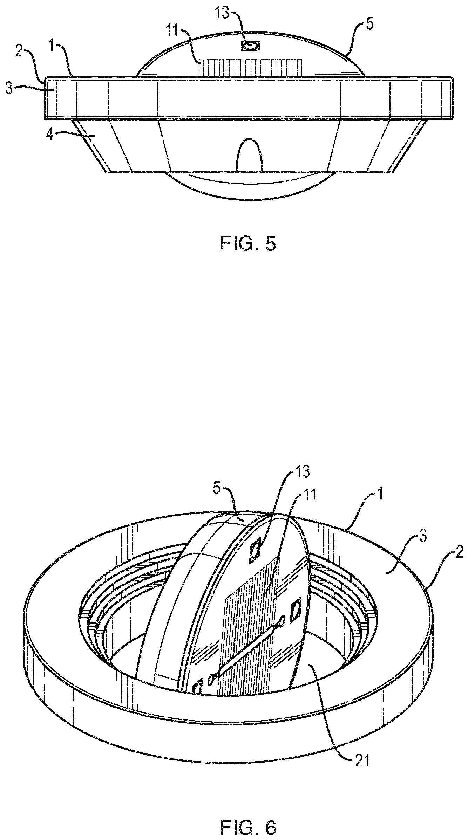

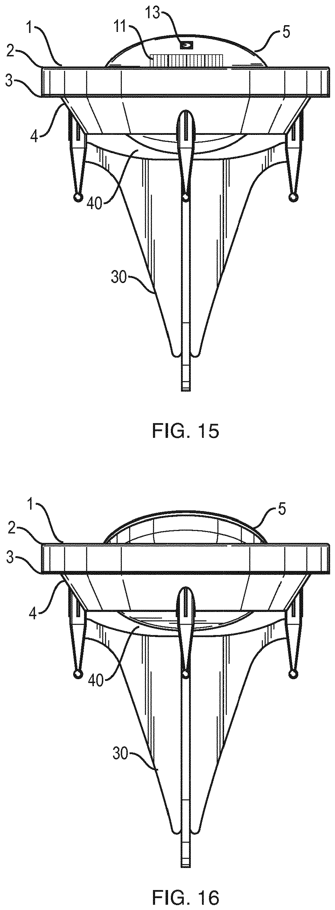

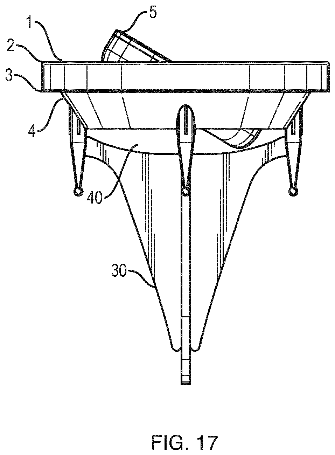

According to a non-limiting aspect of the subject technology, as shown in Figures 1-10 and 13-17, a disk light 1 comprises a disk body 5 pivotably mounted in a frame 2. Disk body 5 serves as a housing and carrier for solar cells 11 for harvesting solar energy and detecting ambient light; rechargeable battery 12 for storing the harvested solar energy; high-power COB or surface mount LEDs 13 (only one is numbered), powerable by battery 12 for emitting light; a two-position (ON/OFF) latching pushbutton switch 14 for enabling and disabling electrical power delivery to LEDs 14; and wiring and driver electronics (not numbered) for driving and controlling the solar cells 11, battery 12, and LEDs 13. Disk body 5 may have 4, 6, 8, or 12 LEDs. The switch, wiring and driver electronics are configured to deliver electrical power to the LEDs from the battery (thereby turning the LEDs on) when the switch is in the ON position and the solar cells are not detecting ambient light; and to cut off power to the LEDs (thereby turning the LEDs off) when the switch is in the OFF position or the solar cells are detecting ambient light. The solar cells 11, battery 12, LEDs 13, switch 14, and wiring and driver electronics are as known to those of skill in the art.

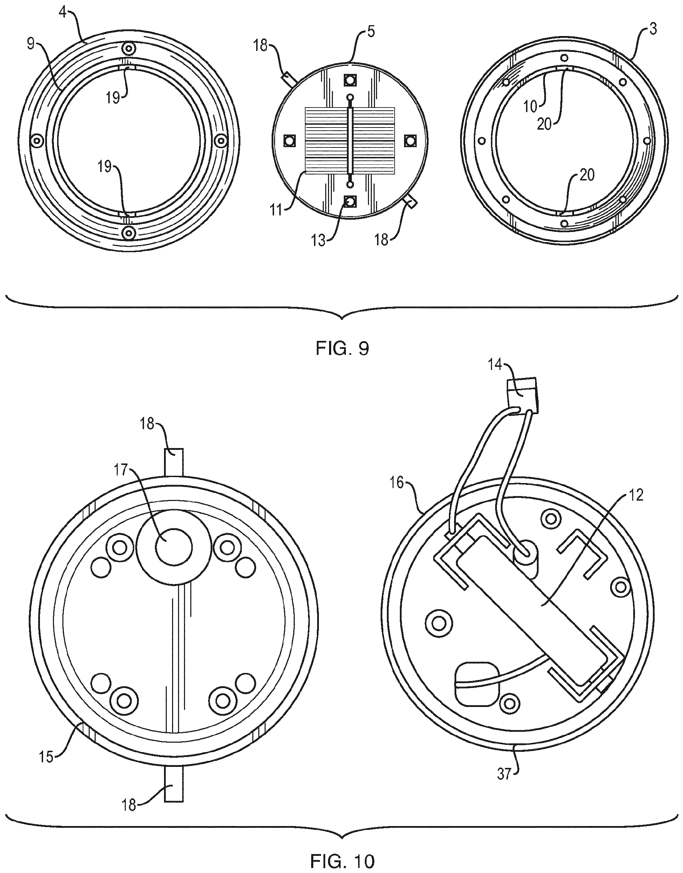

As best seen in Figure 10, disk body 5 consists of lower shell 15 and upper shell 16, both made of metal or plastic which may be injection-molded. Lower shell 15 is attached to upper shell 16, for example, by screws, to form a disk-shaped housing. In a non-limiting embodiment, battery 12 and switch 14 are disposed on a lower surface of upper shell 16; solar cells 11, LEDs 13, and the driver electronics are disposed on an upper surface of upper shell 16 and are encapsulated with a transparent polymer layer. To enable use of switch 14, lower shell 15 carries a flexible boot 17 in a hole through lower shell 15 to cover switch 14. A polymer or elastomer O-ring seal 37 seals and weatherproofs any gap around the circumference when lower shell 15 is assembled to upper shell 16.

Disk body 5 has pegs 18 extending therefrom, for supporting disk body 5 tiltably and rotatably in frame 2. Pegs 18 are disposed to be co-linear to form a stable axis of rotation for disk body 5 in frame 2. Pegs 18 may be integrally formed with and extend from either lower shell 15 or upper shell 16. In the non-limiting embodiment of the Figures, pegs 18 are integrally formed with and extend from lower shell 15.

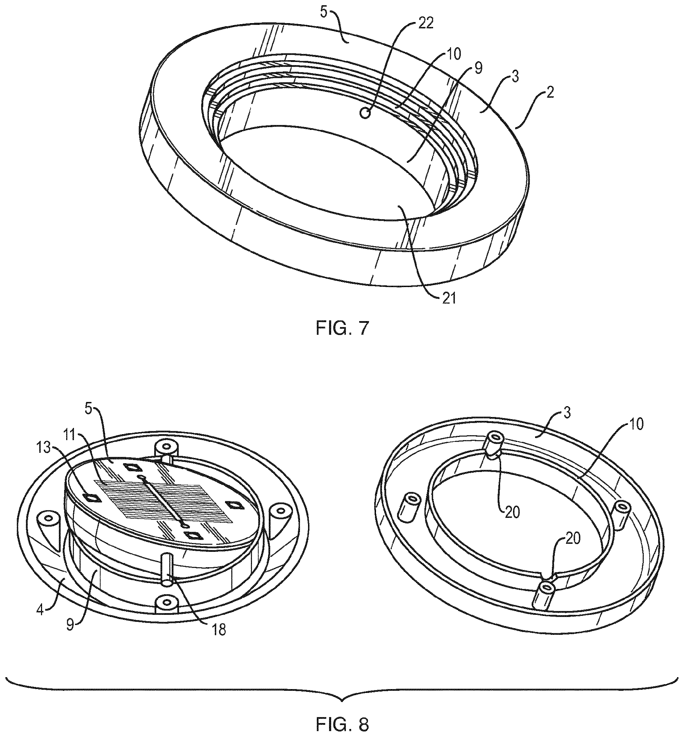

As best seen in Figures 7, 8 and 9, frame 2 comprises frame top 3 and frame bottom 4 which is attached to frame top 3 by screws passing through holes in frame bottom 4 and affixed into holes in frame top 3. Frame 2 defines a circular opening 21 for receiving disk body 5. Frame bottom 4 comprises an inner rim 9. Likewise, frame top 5 comprises an inner rim 10. Inner rims 9, 10 each have, respectively, pairs of notches 19, 20. The notches are arranged co-linearly on the respective inner rims. Frame top 3 and frame bottom 4 are assembled to form frame 2 such that respective inner rims 9, 10 meet to form circular opening 21. Likewise, the pairs of the notches 19, 20 meet to form through-going holes 22 in frame 2 for receiving, holding and supporting pegs 18 of disk body 5, in a rotatable and tiltable configuration. Preferably, circular opening 21 is sized and shaped with respect to disk body 5 to allow for a clearance gap about the circumference of disk body 5, which permits disk body 5 to tilt and rotate about pegs 18. In a non-limiting embodiment, the clearance gap is sufficient to permit disk body 5 to perform complete rotations without colliding with or contacting frame 2.

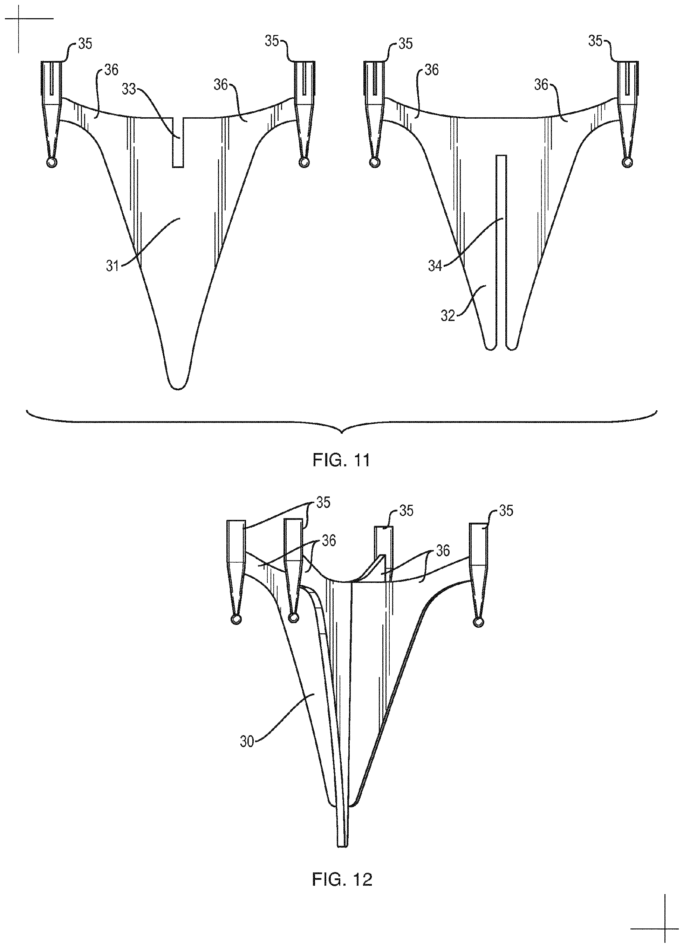

As best seen in Figure 2, frame 2 has recesses 23 in frame bottom 4 to permit removable attachment of a landscape spike to disk light 1. As best seen in Figures 11 and 12, in the non-limiting embodiment shown, landscape spike 30 is composed of long blade 31 and short blade 32, which are preferably made of metal or plastic. Blades 31, 32 have, respectively, slots 33, 34 for assembling and interlocking the blades together to form spike 30, as shown. Blades 31, 32 have integrally formed pegs 35 for insertion into recesses 23 to removably attach spike 30 to frame 2. Pegs 35 are integrally connected to blades 31, 32 by curved, upsweeping arms 36. Preferably, blades 31, 32 taper to a point on the end opposite the arms 36. Preferably, pegs 35 extend beyond arms 36 as shown, to provide additional points of contact with the ground when spike 30 is inserted into the ground.

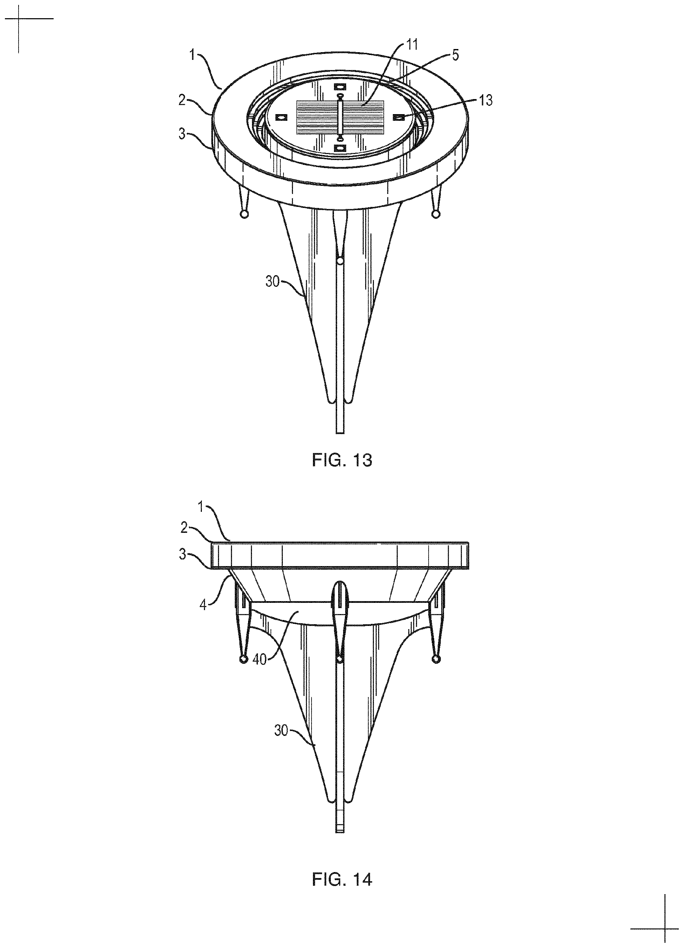

As best seen in Figures 14-17, the curved and/or upsweeping shape of arms 36 opens up a clearance gap 40 between spike 30 and disk light 1, so that disk body 5 is given room to tilt within frame 2. According to a non-limiting embodiment, disk body 5 may be tilted up to 40 degrees from horizontal until it contacts an arm 36. In other non-limiting embodiments, disk body 5 may be tilted up to 10, 15, 20, 25, 30, 35, 40, 45, 50, 55, 60, 65, 70, 75, 80, or 85 degrees from horizontal (0 degrees relative to the frame) until it contacts an arm 36. In other non-limiting embodiments, disk body 5 may perform complete rotations without contacting an arm 36. The permitted degree of tilt will depend on the geometry of arms 36, frame 2 and disk body 5.

According to a non-limiting embodiment of the subject technology, a landscape light kit comprises disk light 1, long blade 31 and short blade 32. The end-user assembles blades 31, 32 to form spike 30, and assembles spike 30 to disk light 1, to form a finished tiltable landscape disk light assembly.

It should be understood that the ornamental appearance of the tiltable disk lights and components thereof as shown in the Figures are within the scope of the subject technology.

While specific embodiments of the invention have been shown and described in detail to illustrate the application of the principles of the invention, it will be understood that the invention may be embodied otherwise without departing from such principles. It will also be understood that the present invention includes any combination of the features and elements disclosed herein. The exemplary embodiments shown herein are presented for the purposes of illustration only and are not meant to limit the scope of the invention.

## Claims

1. A tiltable solar disk light (1) comprising:
a disk body (5) comprising a disk-shaped housing, the housing containing lighting components comprising solar cells (11)
for harvesting solar energy and detecting ambient light; a rechargeable battery (12) for storing the harvested solar energy; LEDs (13) for emitting light; a latching pushbutton switch (14)
having an ON position and an OFF position for enabling and disabling electrical power delivery to the LEDs from the battery; and wiring and driver electronics for operably connecting the solar cells, battery, switch, and LEDs and configured to deliver electrical power to the LEDs from the battery when the switch is in the ON position and the solar cells are not detecting ambient light and to cut off power to the LEDs when the switch is in the OFF position or the solar cells are detecting ambient light;
the disk body further comprising a pair of pegs (18) extending from the housing, the pegs in a co-axial arrangement to form an axis of rotation for the disk body;
a frame (2) defining a circular opening (21) for receiving the disk body, the frame having an inner circumference around the circular opening, and two holes (22) in the inner circumference on opposite sides of the circular opening for receiving the pair of pegs and tiltably supporting the disk body, the circular opening being sized and shaped to define a first clearance gap around the disk body to permit the disk body to tilt within the frame about the axis of rotation formed by the pegs;
a landscape spike (30) removably attached to the frame, the landscape spike configured for insertion into the ground, thereby affixing the tiltable solar disk light to the ground;
**characterized in that** the landscape spike is connected to the frame by curved arms (36) configured to define a second clearance gap between the spike and the frame to permit the disk body to tilt within the frame about the axis of rotation formed by the pegs.

2. The tiltable solar disk light of claim 1 wherein the disk body may be tilted up to 35 degrees from horizontal relative to the frame until it contacts an arm.

3. The tiltable solar disk light of claim 1 wherein the disk body may be tilted up to 40 degrees from horizontal relative to the frame until it contacts an arm.

4. The tiltable solar disk light of claim 1 wherein the disk body may be tilted up to 45 degrees from horizontal relative to the frame until it contacts an arm.

5. The tiltable solar disk light of claim 1 wherein the disk body may be tilted up to 50 degrees from horizontal relative to the frame until it contacts an arm.

6. A kit for making a tiltable solar disk light assembly, the kit consisting of a tiltable solar disk light according to claim 1, and a pair of blades (31, 32) configured to be interlocked together to form the landscape spike which is configured to be removably attached to the frame and also configured for insertion into the ground, thereby affixing the tiltable solar disk light to the ground;
wherein the blades comprise curved arms for connecting the spike to the frame, the curved arms configured to define the second clearance gap between the spike and the frame to permit the disk body to tilt within the frame about the axis of rotation formed by the pegs.

7. The kit for making a tiltable solar disk light assembly of claim 6 wherein the disk body may be tilted up to 35 degrees from horizontal relative to the frame until it contacts an arm.

8. The kit for making a tiltable solar disk light assembly of claim 6 wherein the disk body may be tilted up to 40 degrees from horizontal relative to the frame until it contacts an arm.

9. The kit for making a tiltable solar disk light assembly of claim 6 wherein the disk body may be tilted up to 45 degrees from horizontal relative to the frame until it contacts an arm.

10. The kit for making a tiltable solar disk light assembly of claim 6 wherein the disk body may be tilted up to 50 degrees from horizontal relative to the frame until it contacts an arm.

11. A tiltable solar disk light kit, the kit consisting of a tiltable solar disk light according to claim 1 and:
a pair of tapering blades (31, 32) having slots (33, 34) formed therein such that they can be interlocked together to form the landscape spike insertable into the ground, the blades also having integrally-formed arms, the landscape spike removably connectable to the frame by the arms;
the arms configured to define the second clearance gap when connected to the frame such to permit the disk body to tilt within the frame about the axis of rotation formed by the pegs until the disk body contacts an arm at an angle of maximum tilt.

12. The tiltable solar disk light kit of claim 11 wherein the angle of maximum tilt is up to 40 degrees from horizontal relative to the frame.

13. The tiltable solar disk light kit of claim 11 wherein the angle of maximum tilt is up to 45 degrees from horizontal relative to the frame.

14. The tiltable solar disk light kit of claim 11 wherein the angle of maximum tilt is up to 50 degrees from horizontal relative to the frame.

## Patentansprüche

1. Kippbare Solarscheibenleuchte (1) aufweisend:
einen Scheibenkörper (5), der ein scheibenförmiges Gehäuse aufweist, wobei das Gehäuse Beleuchtungskomponenten aufweist, die Solarzellen (11) zum Sammeln von Solarenergie und zum Erfassen von Umgebungslicht besitzen; eine wiederaufladbare Batterie (12) zum Speichern der gesammelten Solarenergie; LEDs (13) zum Emittieren von Licht; einen verriegelnden Druckknopfschalter (14) mit einer Ein-Position und einer Aus-Position zum Aktivieren und Deaktivieren der elektrischen Stromzufuhr zu den LEDs von der Batterie; und Verkabelung und Treiberelektronik zum betriebsmäßigen Verbinden der Solarzellen, der Batterie, des Schalters und der LEDs, die so konfiguriert ist, dass sie elektrische Energie zu den LEDs von der Batterie leitet wenn der Schalter in der Ein-Position ist und die Solarzellen kein Umgebungslicht erfassen und die Energiezufuhr zu den LEDs unterbricht, wenn sich der Schalter in der Aus-Position befindet oder die Solarzellen Umgebungslicht erfassen;
wobei der Scheibenkörper des Weiteren ein Paar von Zapfen (18) aufweist, die sich von dem Gehäuse erstrecken, wobei die Zapfen in einer koaxialen Anordnung angeordnet sind, um eine Drehachse für den Scheibenkörper auszubilden;
ein Rahmen (2), welcher eine kreisförmige Öffnung (21) zur Aufnahme des Scheibenkörpers definiert, wobei der Rahmen einen inneren Umfang um die kreisförmige Öffnung herum und zwei Löcher (22) in dem inneren Umfang auf gegenüberliegenden Seiten zur Öffnung der Aufnahme des Paares von Zapfen und zum kippbaren Unterstützen des Scheibenkörpers aufweist, wobei die kreisförmige Öffnung so bemessen und geformt ist, dass sie einen ersten Spielraum um den Scheibenkörper definiert, um es dem Scheibenkörper zu ermöglichen, innerhalb des Rahmens um die durch die Zapfen gebildete Drehachse zu kippen; einen Landschaftsspieß (30), der entfernbar an dem Rahmen angebracht ist,
wobei der Landschaftsspieß zum Einsetzen in den Boden konfiguriert ist, wodurch die kippbare Solarscheibenleuchte am Boden befestigt wird;
**dadurch gekennzeichnet, dass** der Landschaftsspieß mit dem Rahmen durch gekrümmte Arme (36) verbunden ist, die so konfiguriert sind, dass sie einen zweiten Spiegelraum zwischen dem Spieß und dem Rahmen definieren, um dem Scheibenkörper zu erlauben, innerhalb des Rahmens um die von den Zapfen gebildete Drehachse zu kippen.

2. Kippbare Solarscheibenleuchte nach Anspruch 1, wobei der Scheibenkörper bis zu 35 Grad aus der Horizontalen relativ zum Rahmen gekippt werden kann, bis er einen Arm berührt.

3. Kippbare Solarscheibenleuchte nach Anspruch 1, wobei der Scheibenkörper bis zu 40 Grad aus der Horizontalen relativ zum Rahmen gekippt werden kann, bis er einen Arm berührt.

4. Kippbare Solarscheibenleuchte nach Anspruch 1, wobei der Scheibenkörper bis zu 45 Grad aus der Horizontalen relativ zum Rahmen gekippt werden kann, bis er einen Arm berührt.

5. Kippbare Solarscheibenleuchte nach Anspruch 1, wobei der Scheibenkörper bis zu 50 Grad aus der Horizontalen relativ zum Rahmen gekippt werden kann, bis er einen Arm berührt.

6. Bausatz zum Herstellen einer kippbaren Solarscheibenlichtanordnung, wobei der Bausatz aus einer kippbaren Solarscheibenleuchte nach Anspruch 1 und einem Paar Zungen (31, 32) besteht, die konfiguriert sind um miteinander verriegelt werden zu können, um den Landschaftsspieß auszubilden, der so konfiguriert ist, um entfernbar an dem Rahmen angebracht werden zu können und ebenso konfiguriert ist, um in den Boden eingesetzt zu werden, wobei er die kippbare Solarscheibenleuchte an dem Boden befestigt;
wobei die Zungen gekrümmte Arme aufweisen, um den Spieß mit den Rahmen zu verbinden, wobei die gekrümmten Arme konfiguriert sind, um den zweiten Spielraum zwischen dem Spieß und dem Rahmen zu definieren, um es dem Scheibenkörper zu gestatten innerhalb des Rahmens um die von den Zapfen gebildete Drehachse zu kippen.

7. Bausatz zum Herstellen einer kippbaren Solarscheibenlichtanordnung nach Anspruch 6, wobei der Scheibenkörper um 35 Grad von der Horizontalen relativ zu dem Rahmen gekippt werden kann, bis er einen Arm berührt.

8. Bausatz zum Herstellen einer kippbaren Solarscheibenlichtanordnung nach Anspruch 6, wobei der Scheibenkörper um 40 Grad von der Horizontalen relativ zu dem Rahmen gekippt werden kann, bis er einen Arm berührt.

9. Bausatz zum Herstellen einer kippbaren Solarscheibenlichtanordnung nach Anspruch 6, wobei der Scheibenkörper um 45 Grad von der Horizontalen relativ zu dem Rahmen gekippt werden kann, bis er einen Arm berührt.

10. Bausatz zum Herstellen einer kippbaren Solarscheibenlichtanordnung nach Anspruch 6, wobei der Scheibenkörper um 50 Grad von der Horizontalen relativ zu dem Rahmen gekippt werden kann, bis er einen Arm berührt.

11. Bausatz für eine kippbare Solarscheibenleuchte, wobei der Bausatz besteht aus einer kippbaren Solarscheibenleuchte nach Anspruch 1 und:
einem Paar sich verjüngender Zungen (31, 32), welche Schlitze (33, 34) darin ausgebildet aufweisen, so dass sie miteinander verriegelt werden können, um den Landschaftsspieß, der in den Boden einbringbar ist, auszubilden, wobei die Zungen auch integral ausgebildete Arme aufweisen, wobei der Landschaftsspieß durch die Arme abnehmbar mit dem Rahmen verbunden werden kann;
wobei die Arme konfiguriert sind, um den zweiten Spielraum auszubilden, wenn sie mit dem Rahmen verbunden sind, um es so dem Scheibenkörper zu gestatten innerhalb des Rahmens um die Rotationsachse, die durch die Zapfen ausgebildet ist, zu kippen, bis der Scheibenkörper einen Arm in einem Winkel der maximalen Neigung berührt.

12. Bausatz für eine kippbare Solarscheibenleuchte nach Anspruch 11, wobei der maximale Neigungswinkel bis zu 40 Grad von der Horizontalen relativ zu dem Rahmen ist.

13. Bausatz für eine kippbare Solarscheibenleuchte nach Anspruch 11, wobei der maximale Neigungswinkel bis zu 45 Grad von der Horizontalen relativ zu dem Rahmen ist.

14. Bausatz für eine kippbare Solarscheibenleuchte nach Anspruch 11, wobei der maximale Neigungswinkel bis zu 50 Grad von der Horizontalen relativ zu dem Rahmen ist.

## Revendications

1. Une lumière de disque solaire inclinable (1) comprenant :
un corps de disque (5) comprenant un logement en forme de disque, le logement contenant des composants d'éclairage comprenant des cellules solaires (11) pour récolter l'énergie solaire et
détecter la lumière ambiante ; une batterie rechargeable (12) pour stocker l'énergie solaire récoltée ; des LEDs (13) pour émettre de la lumière ; un interrupteur à bouton-poussoir autobloquant (14) ayant une position ON et une position OFF pour activer et désactiver l'alimentation électrique des LEDs à partir de la batterie ; et un câblage et des circuits électroniques pour connecter de manière opérationnelle les cellules solaires, la batterie, l'interrupteur et les LEDs et configurés pour fournir de l'énergie électrique aux LED à partir de la batterie lorsque l'interrupteur est en position ON et que les cellules solaires ne détectent pas la lumière ambiante et pour couper l'alimentation des LEDs lorsque l'interrupteur est en position OFF ou que les cellules solaires détectent la lumière ambiante ;
le corps de disque comprenant en outre une paire de goupilles (18) s'étendant à partir du boîtier, les goupilles étant disposées de manière coaxiale pour former un axe de rotation pour le corps du disque ;
un cadre (2) définissant une ouverture circulaire (21) pour recevoir le corps de disque, le cadre ayant une circonférence intérieure autour de l'ouverture circulaire, et deux trous (22) dans la circonférence intérieure sur les côtés opposés de l'ouverture circulaire pour recevoir la paire de goupilles et supporter de manière basculante le corps de disque, l'ouverture circulaire étant dimensionnée et formée pour définir un premier espace libre autour du corps de disque pour permettre au corps du disque de basculer à l'intérieur du cadre autour de l'axe de rotation formé par les goupilles ;
un piquet de positionnement (30) fixé de manière amovible au cadre, le piquet de positionnement étant configuré pour être inséré dans le sol, fixant ainsi au sol la lumière de disque solaire inclinable ;
**caractérisé en ce que** le piquet de positionnement est reliée au cadre par des bras incurvés (36) configurés pour définir un deuxième espace libre entre le piquet et le cadre pour permettre au corps de disque de basculer à l'intérieur du cadre autour de l'axe de rotation formé par les goupilles.

2. Lumière de disque solaire inclinable selon la revendication 1, dans laquelle le corps de disque peut être incliné jusqu'à 35 degrés par rapport à l'horizontale relativement au cadre jusqu'à ce qu'il entre en contact avec un bras.

3. Lumière de disque solaire inclinable selon la revendication 1, dans laquelle le corps du disque peut être incliné jusqu'à 40 degrés par rapport à l'horizontale relativement au cadre jusqu'à ce qu'il entre en contact avec un bras.

4. Lumière de disque solaire inclinable selon la revendication 1, dans laquelle le corps du disque peut être incliné jusqu'à 45 degrés par rapport à l'horizontale relativement au cadre jusqu'à ce qu'il entre en contact avec un bras.

5. Lumière de disque solaire inclinable selon la revendication 1, dans laquelle le corps du disque peut être incliné jusqu'à 50 degrés par rapport à l'horizontale relativement au cadre jusqu'à ce qu'il entre en contact avec un bras.

6. Un kit pour la fabrication d'un ensemble de lumière de disque solaire inclinable, le kit consistant en un lumière de disque solaire inclinable selon la revendication 1, et une paire de lames (31, 32) configurées pour être emboîtées ensemble pour former le piquet de positionnement qui est configuré pour être fixé de manière amovible au cadre et également configuré pour être inséré dans le sol, fixant ainsi la lumière de disque solaire inclinable au sol ;
dans lequel les lames comprennent des bras incurvés pour relier le piquet au cadre, les bras incurvés étant configurés pour définir le deuxième espace libre entre le piquet et le cadre afin de permettre au corps de disque de basculer à l'intérieur du cadre autour de l'axe de rotation formé par les goupilles.

7. Kit pour la fabrication d'un ensemble de lumière de disque solaire inclinable selon la revendication 6, dans lequel le corps de disque peut être incliné jusqu'à 35 degrés par rapport à l'horizontale relativement au cadre jusqu'à ce qu'il entre en contact avec un bras.

8. Kit pour la fabrication d'un ensemble de lumière de disque solaire inclinable selon la revendication 6, dans lequel le corps de disque peut être incliné jusqu'à 40 degrés par rapport à l'horizontale relativement au cadre jusqu'à ce qu'il entre en contact avec un bras.

9. Kit pour la fabrication d'un ensemble de lumière de disque solaire inclinable selon la revendication 6, dans lequel le corps de disque peut être incliné jusqu'à 45 degrés par rapport à l'horizontale relativement au cadre jusqu'à ce qu'il entre en contact avec un bras.

10. Kit pour la fabrication d'un ensemble de lumière de disque solaire inclinable selon la revendication 6, dans lequel le corps de disque peut être incliné jusqu'à 50 degrés par rapport à l'horizontale relativement au cadre jusqu'à ce qu'il entre en contact avec un bras.

11. Un kit pour lumière de disque solaire inclinable, le kit consistant en une lumière de disque solaire inclinable selon la revendication 1 et :
une paire de lames fuselées (31, 32) ayant des fentes (33, 34) formées dans celles-ci de sorte qu'elles peuvent être emboîtées ensemble pour former le piquet de positionnement insérable dans le sol, les lames ayant également des bras formés solidairement, le piquet de positionnement pouvant être connecté de manière amovible au cadre par les bras ;
les bras étant configurés pour définir le deuxième espace libre lorsqu'ils sont connectés au cadre de manière à permettre au corps de disque de basculer à l'intérieur du cadre autour de l'axe de rotation formé par les goupilles jusqu'à ce que le corps de disque entre en contact avec un bras à un angle d'inclinaison maximale.

12. Kit pour lumière de disque solaire inclinable selon la revendication 11, dans lequel l'angle d'inclinaison maximale est au plus de 40 degrés par rapport à l'horizontale relativement au cadre.

13. Kit pour lumière de disque solaire inclinable selon la revendication 11, dans lequel l'angle d'inclinaison maximale est au plus de 45 degrés par rapport à l'horizontale relativement au cadre.

14. Kit pour lumière de disque solaire inclinable selon la revendication 11, dans lequel l'angle d'inclinaison maximale est au plus de 50 degrés par rapport à l'horizontale relativement au cadre.
